# EUROPEAN PATENT SPECIFICATION

(11) **EP 2 247 186 B1**
(45) Date of publication and mention of the grant of the patent: **03.09.2014**
(21) Application number: 09705697.2
(22) Date of filing: 26.01.2009
(51) Int. Cl.: A21C 1/06, A21C 1/14, A21C 3/04, B01F 7/04, B01F 15/02

(54) **Method and device for mixing and/or kneading food products**
Verfahren und Vorrichtung zum Mischen und/oder Kneten von Lebensmittelprodukten
Procédé et dispositif de mélange et/ou de pétrissage de produits alimentaires

(30) Priority: 29.01.2008 NL 1034970
(43) Date of publication of application: 10.11.2010
(73) Proprietor: Sotec Beheer Twee B.V., 6222 NK Maastricht (NL)
(72) Inventor: LEKNER, Gilis, Anne, Maria, Victor, NL-6325 Am Berg En Terblijt (NL); VAN PRAAG, Marinus, Arie, NL-6241 NN Bunde (NL)
(74) Representative: Algemeen Octrooi- en Merkenbureau B.V.
(86) International application number: PCT/NL2009/000015
(87) International publication number: WO 2009/096774

(56) References cited:
- FR-A- 1 445 076
- US-A- 3 605 641
- US-A- 3 738 617
- US-A- 3 752 448
- US-A1- 2001 006 484

## Description

The invention relates to a method for mixing and/or kneading food products, using a device which is provided with at least one container having an inlet, an outlet as well as at least one rotary shaft extending substantially in the longitudinal direction of the container, which shaft is provided with at least one tool, which tool comprises at least one bar which is connected to the shaft via spacers, said shaft comprising an operative area for continuous mixing and/or kneading of food products, which extends in the longitudinal direction of said shaft.

Such a device and method suitable for kneading and/or mixing food products are known from NL-1029273, the device comprises a container, in which two counter-rotating shafts are disposed side by side, which shafts are fitted with tools in the form of bars that helically surround the shafts. In the container, the dough is transported from the inlet to the outlet in use, in the container, the rate of movement of the products in the container being determined by the shape of the tool and the tilting of the container, among other things, so that the force of gravity can contribute positively towards increasing the rate of movement of the food products in the container.

Although excellent results are obtained with the known device, tilting the container by means of the lifting mechanism for the purpose of influencing the rate of movement of the food products in the container takes energy. In addition, such a lifting mechanism requires periodic maintenance.

US-3.752.448, which discloses the preamble of claim 1, and US-3.738.617 both disclose a dough conditioning apparatus. Document FR 1.445.076 A1 discloses a device for mixing and/or kneading food products, having adjustable rollers positioned below a kneader, for providing a sheet of pastry at an outlet. The gap between the rollers is adjustable for setting the thickness of the sheet pasty.

Document US 3,605,641 A1 discloses a ravioli making machine, having adjustable rollers for adjusting the thickness of the sheet of pastry.

The object of the present invention is to provide an improved method for mixing and/or kneading food products.

This object is accomplished with the method according to claim 1.

In an embodiment of the method, it is possible to control the quality of the mixing and/or kneading process of the food products in a container, for example by having the shafts rotate at a higher or lower speed, without this necessarily having any effect on the amount produced by means of the device. Unlike known devices, the rate of movement of the food products between the inlet and the outlet is hardly influenced by the shafts fitted with the tool, because the movement of the food products in the container will according to the invention take place mainly in vertical direction and hardly in horizontal direction. The rate of the vertical movement between the inlet and the outlet is mainly determined by gravity. By using such a configuration of the inlet and the outlet, a maximum contribution of the force of gravity to the rate of movement is realised without energy-consuming devices being required. The inlet opening extending in the longitudinal direction evenly distributes the food products from, for example, a distributor hopper over the operative area of the tool that extends substantially identically in the longitudinal direction. In this way the entire capacity of the tool extending in longitudinal direction is utilised in an efficient manner and all the food products being supplied are mixed or kneaded in the operative area of the shaft. The food products are discharged from the container through the outlet in the same efficient manner.

The device used in the method according to the present invention can furthermore be used in a very flexible manner for mixing and/or kneading, in short succession, products that require different mixing and/or kneading treatments.

A special preferred embodiment of the invention is characterised in that a virtual vertical extends both through the inlet and through the outlet.

Since the same vertical crosses both the inlet and the outlet, the openings defined by the inlet and the outlet are vertically aligned. The term "virtual vertical" is understood to mean a line extending in the direction of gravity.

Disposed on a shaft between the inlet and the outlet is a tool in the form of at least one bar, which tool is suitable in particular for kneading food products, the term "kneading" being understood to mean the putting of energy and gas into the food products to be processed, inter alia by means of shearing forces being generated by means of the bars of the tools, but also between the bars and the walls of the container. For kneading, the bar preferably extends over practically the entire length of the shaft, so that the forces will be evenly distributed over the shaft. According to another possibility, however, several bars are arranged in line behind each other, or U-shaped brackets are mounted to the shaft, in which case the bridge portion of the U-shaped brackets forms the bar and the legs thereof form the spacers.

The device used in the method according to the present invention is suitable in particular for kneading a viscous mixture by means of the tool, whilst the rotating bars can also mix the food products present in the container, of course. Preferably, the central axis of the inlet is located substantially on the same vertical as the central axis of the outlet.

The term "food products" as used herein is further understood to refer to food components and additives that are common in the food industry.

According to the invention, the transverse dimension of the inlet and/or the outlet can be variably adjusted.

Varying the dimension of the inlet and/or the outlet makes it possible to control the amount per unit time that is supplied to the container and/or the amount per unit time that is discharged from the container, and thus the residence time and the volume of the food products in the container. If it is empirically determined that the food products need to be mixed and/or kneaded longer to obtain the desired quality, the dimension of, for example, the outlet can be temporarily reduced in comparison to the inlet, so that temporarily more food products will be supplied to the container through the inlet than discharged through the outlet in that case. In this way the container will become fuller and the food products will have a longer average stay in the container, such that the food products will be mixed and/or kneaded longer. Conversely, the outlet may be enlarged temporarily in comparison with the inlet. Such an inlet and/or outlet whose dimension can be temporarily varied is especially advantageous in the method for continuous mixing and/or kneading of food products according to the invention, because a temporary change of said dimensions makes it possible to control the residence time of the food products and thus the quality of the kneaded and/or mixed food products.

The dimension of the inlet and the outlet in the longitudinal direction is preferably constant, whilst the width of the inlet and outlet openings is varied, so that it is ensured at the inlet that the food products will be evenly distributed over the tools extending in the longitudinal direction and that uniformly mixed/kneaded food products can be discharged at the outlet.

As a result of the corresponding dimensions of the inlet and the outlet, the amount of the food products to be treated that is supplied to the container per unit time will preferably be substantially the same as or exhibit a fixed proportion in relation to the amount to be discharged per unit time, so that the container can be operated continuously, thereby providing a device for continuous mixing and/for kneading of food products.

Another embodiment of the device used in the method according to the invention is characterised in that the outlet of the container is provided with two counter-rotatable discharge rollers extending parallel to the shafts, between which a discharge gap is present.

The food products that have been treated in the container are uniformly discharged from the container by means of such discharge rollers. In addition, the discharge rate of the treated food products through the outlet can be controlled in dependence on the speed of rotation of the discharge rollers. Furthermore, the gases contained in the food products, which partially determine the quality of the food products to be treated with the tool, are uniformly distributed by the discharge rollers. The food products are additionally stretched by the counter-rotating discharge rollers, which is normally a separate operation, thereby rendering the device used in the method according to the present invention more efficient and thus more economical. The discharge rollers are counter-rotating, with the discharge roller located to the right of the discharge gap rotating in anti-clockwise direction and the discharge roller located to the left of the discharge rotating in clockwise direction.

The invention may also have only one rotatable discharge roller extending parallel to the shaft, in which case a discharge gap will be present between a wall of the container and said discharge roller.

Yet another embodiment of the device used in the invention is characterised in that the discharge gap is variably adjustable by moving the discharge rollers with respect to each other or by moving the discharge roller with respect to the wall.

In addition to adjusting the speed of rotation it is possible to adjust the amount to be discharged per unit time, and thus the residence time of the food products in the container, by varying the outlet opening formed by the discharge gap by means of the variably adjustable discharge gap. The gap width of the discharge gap can for example be varied by moving the centres or axes of the discharge rollers relative to each other. Furthermore, it is possible to adjust the thickness of the layer of food products produced between the discharge rollers to the desired thickness in a simple manner by adjusting the gap width. Said possibility to adjust the thickness of the layer of food products may be advantageous in particular in connection with processes that take place after the food products have left the device used in the method according to the present invention.

Another embodiment of the device used in the method according to the invention is characterised in that the inlet of the container is provided with two counter-rotatable supply rollers extending parallel to the shafts, between which a supply gap is present.

To prevent an uneven supply of food products into the container, the container inlet is fitted with supply rollers, which evenly distribute the food products to be treated in the longitudinal direction of the tool. It is also possible to set the supply rate of the food products into the container to a desired supply rate in a simple manner by controlling the speed of rotation of the supply rollers. Furthermore, a first mixing and/or kneading treatment takes place by means of a compressive force being exerted on the food products by means of the supply rollers, wherein also the gases contained in the food products can be distributed more uniformly. The supply rollers are counter-rotatable, preferably in a similar manner as the discharge rollers. A supply rate which can be varied by means of the supply rollers and/or a discharge rate which can be varied by means of the discharge rollers is (are) in particular advantageous in the case of a device for continuous mixing and/or kneading of food products, because it is possible to control the residence time of the food products in the container via a temporary change in said rates, thereby making it possible to control the quality of the kneaded and/or a mixed food products. According to another possibility, the device comprises only one rotatable supply roller extending parallel to the shaft, in which case a supply gap will be present between the supply roller and a wall of the container.

Yet another embodiment of the device used in the method according to the invention is characterised in that the supply gap is variably adjustable by moving the supply rollers with respect to each other or by moving the supply roller with respect to the wall.

The dimension of the inlet opening for the food products formed by the supply gap can be varied by means of the supply roller(s), thus making it possible to set a desired amount to be supplied per unit time. The gap with of the discharge gap can be varied by moving the centres or axes of the rollers relative to each other.

With the device used in the method according to the present invention it is also possible to keep the dimension of the supply gap constant and to vary the discharge gap (temporarily), or vice versa. In this way it is possible to control the residence time of the food products, and thus the quality of the food products, in a simple manner while using a relatively simple device, in which only the width of the supply gap or of the discharge gap can be varied.

Yet another embodiment of the device used in the method according to the invention is characterised in that the tool extends substantially parallel to the shaft.

When a tool extending substantially parallel to the shaft is used, the forces that are exerted on the tool in use will be substantially constant if the food products are uniformly distributed over the shaft. When the tool is loaded in such an even manner, the risk of fracture is zero, so that the tool will have a relatively long life. The spacing between the container wall and the bar or bars of the tool is preferably comparatively small, preferably smaller than half the length of a spacer, so that the shearing forces being generated between the wall and the bar in use will be maximised, resulting in a better kneading result of the food products in the container.

Yet another embodiment of the device used in the method according to the invention is characterised in that the shaft is provided with at least two tools disposed opposite each other, which tools and which shaft extending therebetween lie in a virtual plane.

In order to be able to process the food products in an effective way, each shaft is provided minimally with two tools. If the two tools and the shaft extending therebetween lie in a virtual plane, the shaft will be loaded symmetrically, resulting in less wear and a prolonged shaft life.

Yet another embodiment of the device used in the method according to the invention is characterised in that the condition of the food products can be registered by using detection means, which detection means are connected to a control unit, by means of which the amount of energy to be input into the food products can be changed.

Said detection means may for example be temperature sensors or sensors that measure the energy supplied to the shafts or sensors that measure the viscosity or other quality characteristics of the food products which have been kneaded or mixed and/or are to be kneaded and/or mixed. When such detection means detect a variation that exceeds a threshold value, a control unit may respond thereto by changing the energy input into the food products to be kneaded / mixed.

The amount of energy to be input into the food products can be changed by adjusting the speed of rotation of the shaft(s) and/or the supply rollers and/or the discharge rollers. In this way the shearing forces generated between the tool and the container wall are increased or decreased, so that the food products will be kneaded better or less well.

The amount of energy to be input into the food products can also be changed by adapting the dimension of the inlet and/or the outlet. In this way the residence time of the food products is influenced, i.e. prolonged or shortened. The inlet and/or the outlet are preferably formed by the supply gap and the discharge gap. If the outlet is formed by scrapers, the dimension of the outlet can also be varied by means of said scrapers.

Furthermore, the amount of energy to be input into the food products can be changed by adjusting the temperature of the supply rollers and/or the discharge rollers and/or the container walls.

To that end the rollers and/or the wall can be heatable.

When the above means are used, the occurrence of excessive variations is eliminated and a desired condition can be realised in the container via a closed loop and, concomitant therewith, the desired quality of the food products to be kneaded and/or mixed is thus obtained.

Yet another embodiment of the device used in the method according to the invention is characterised in that the device comprises a pre-mixer for providing a viscous mixture, which pre-mixer is disposed upstream of the container, whilst energy can be added to the viscous mixture in the container by means of the tool.

A pre-mixer may be a continuous mixer as known per se, which is normally characterised by a spiral or spiral-like tool comprising a large number of windings per unit length, for example more than 10 windings per metre, whilst the food products mixed by means of the pre-mixer are in particular kneaded in the container of the device used in the method according to the present invention.

Yet another embodiment of the device used in the method according to the invention is characterised in that the shaft or the shafts disposed side by side in the container form a first layer, above which and/or below which there is provided at least one further layer of at least two counter-rotatable shafts extending side by side substantially in the longitudinal direction of the container.

It is possible to provide a number of layers of shafts provided with tools in dependence on the food products to be treated. Discharge rollers and/or supply rollers may be provided between said layers in that case, but preferably all layers are disposed between the discharge rollers and the supply rollers.

The invention will now be explained in more detail with reference to the appended figures, in which:
Figures 1a-c are perspective views of the device and the container used in the method according to the invention;
Figures 2a and 2b are perspective views of an embodiment of the device and the container used in the method according to the invention;
Figure 3 is a schematic sectional view of another embodiment of a device used in the method according to the invention.

Like parts are indicated by the same numerals in the various figures.

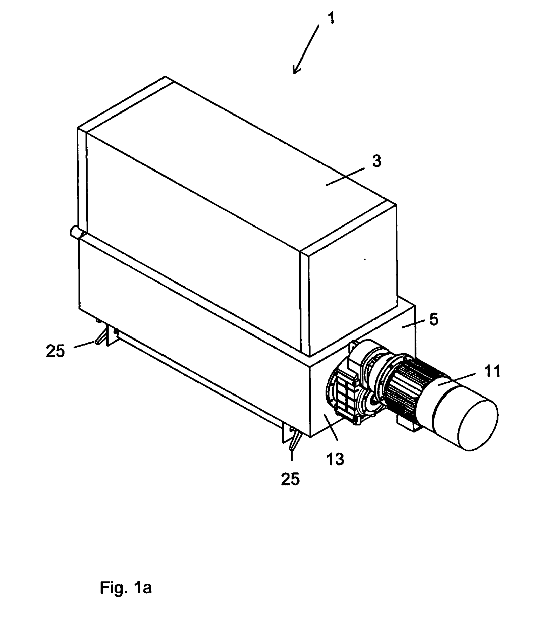

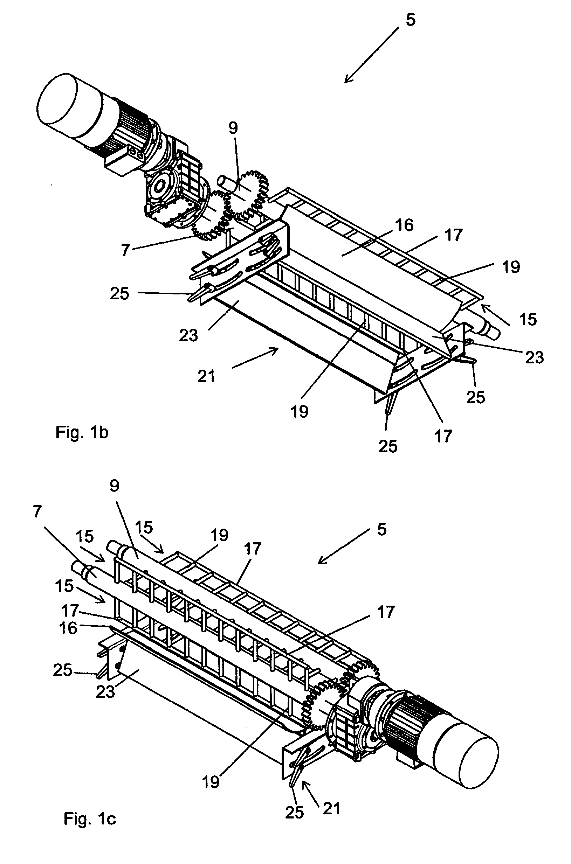

Figures 1a-c are perspective views of a device 1 and a container 5 used in the method according to the present invention, from which the outer wall 13 of the container 5 has been left out for the sake of clarity in figures 1b and 1 c. The device 1 comprises a pre-mixer 3, which pre-mixer 3 may be a mixer configured in a manner which is known per se, but which preferably has an outlet (not shown) that extends in the longitudinal direction. The container 5 of the device 1 used in the method according to the present invention comprises an inlet (not shown), an outlet (not shown), as well as at least two counter-rotatable shafts 7, 9 extending side by side substantially in the longitudinal direction of the container 5. The container 5 is provided with a driving mechanism 11. The shafts 7, 9 disposed in the container 5 can be rotated in opposite directions by means of the driving mechanism 11. In use, the shafts 7, 9 preferably rotate at a constant rotational speed.

The container 5 is provided with an inlet for filling the container 5 with the food products to be treated via the outlet of the pre-mixer 3, which is vertically aligned with said inlet, and with an outlet, which is vertically aligned with the inlet, for discharging the treated food products from the container 5. The rotary shafts 7, 9 extend the entire length of the container 5. The container 5 is further provided with curved walls 16.

Each shaft 7, 9 is provided with a tool 15, which comprises two bars 17 extending parallel to the shaft 7, 9, which bars are connected to the shaft 7, 9 by means of spacers 19. The tool 15 extends in the longitudinal direction and defines an operative area, in which actual contact may take place between the bar 17 of the tool 15 and the food products present in the container 5. During rotation of the shafts 7, 9, the food products present in the container 5 are mainly kneaded by means of the bars 17. In use, the shafts 7, 9 rotate in opposite directions. The tools 15 on the two shafts 7, 9 comprise an overlapping area in the container 5 and are consequently oriented asymmetrically, in mirror image of each other, so that the tool 15 of the first shaft 7 will not come into contact with the tool 15 of the second shaft 9. In the illustrated preferred embodiment, the asymmetrical orientation of the tools 15 is as follows: The tools 15 of the shaft 7 lie in a first virtual plane, whilst the two tools 15 of the shaft 9 lie in a second virtual plane, which first virtual plane of the shaft 7 extends transversely to the second virtual plane of the shaft 9. A tool 15 which is oriented in such a manner is excellently suitable for kneading the food products. Said kneading process takes place in particular between the longitudinally extending walls 16 of the container 5 and the longitudinally extending bars 17, and also between the bars 17 of the shaft 7 and the bars 17 of the shaft 9.

The container 5 that is shown in figures 1a-c further comprises an outlet 21, which is bounded by scrapers 23 extending in the longitudinal direction of the container 5, which scrapers are adjustable via slotted holes by means of handles 25. The scrapers 23 can be fixed in the desired position by means of the handles 25. In use, the scrapers 23 abut against the curved walls 16. Food products that do not fit in the spaces between the curved walls 16 and the bars 17 while kneading takes place will be discharged via the outlet 21 by means of the scrapers 23.

In the container 5 used in the method according to the present invention, the outlet 21 is vertically aligned with the inlet of the container 5, in such a manner that the inlet, which extends substantially in the horizontal plane, is crossed by the same vertical as the outlet 21, which likewise extends substantially in a (lower) horizontal plane. The central axis of the inlet is located on the same vertical as the central axis of the outlet 21 of the container 5. Important is that both the outlet and the inlet of the container 5 can extend substantially in the longitudinal direction over the operative area of the shafts, said operative area being formed by the longitudinally extending tool 15.

The operation of the device 1 is as follows:
The food products, preferably ingredients for preparing a flour product, are mixed by means of the pre-mixer 3, and a (preferably viscous) mixture is discharged through the outlet of the pre-mixer 3 to the inlet of the container 5. A vertical extends through the outlet of the pre-mixer 3, which vertical also extends through the inlet of the container 5. In the container 5, the batter prepared by means of the pre-mixer 3 is kneaded by means of the tool 15 mounted on the shaft 7, 9. Under the influence of the force of gravity, and by means of the scrapers 23, the food products kneaded by means of the tools 15 are discharged through the outlet 21 for possible further processing. Since a virtual vertical line, or the vertical, extends through the inlet as well as the outlet 21, the force of gravity has a maximum effect on the transport of the food products through the container 5 of the device 1 used in the method according to the present invention.

The scrapers 23 do not consume any energy in use and are economical, therefore, as well as low-maintenance.

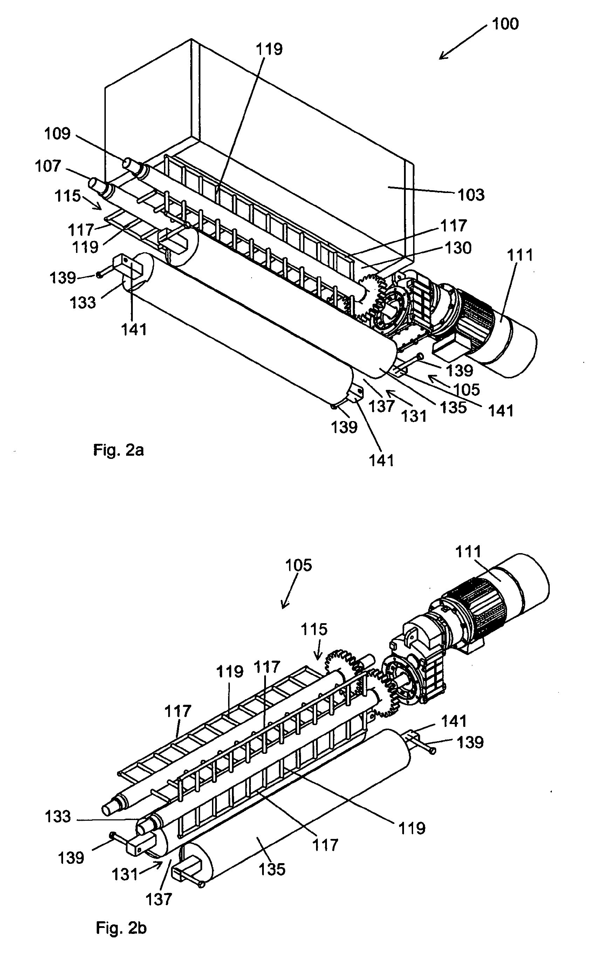

Figure 2a is a perspective view of a device 100 used in the method according to the present invention, whilst figure 2b is a perspective view of the container 105, from which the outer walls of the container 105 have been left out for the sake of clarity.

Parts corresponding to parts shown in figures 1a-1c are indicated by the same numerals, augmented by 100, in figures 2a and 2b.

The container 105 comprises two shafts 106, 109, which are fitted with a tool 115, which is identical as regards its shape and orientation to the tool 15 that is shown in figures 1b and 1c.

The container 105 is provided with an inlet 130 (figure 2a), which is aligned with the outlet of the pre-mixer 103.

The container 105 is further provided with an outlet 131, which outlet 131 comprises two counter-rotatable discharge rollers 133, 135 extending parallel to the shafts 107, 109, between which a discharge gap 137 extending in the longitudinal direction of the container 105 is present. The width of the discharge gap 137, i.e. the spacing between the discharge rollers 133, 135, is variably adjustable by moving the discharge rollers 133, 135 with respect to each other by means of the adjusting guides 139. The discharge rollers 133, 135 have ends 141, which are slidably movable over the adjusting guides 139 and which can be fixed in position thereon, so that a discharge gap 137 having a desired dimension is defined by means of the discharge rollers 133, 135.

The outlet 131 defined by the discharge gap 137 preferably has the same dimension as the inlet 130, but it is also possible to change said dimension if the conditions in the container require so. A virtual vertical (not shown) extends both through the inlet 130 and through the outlet 131, which means that the inlet 130 and the outlet 131 are vertically aligned.

The operation of the device 100 is practically identical to the operation of the device 1, with this difference that discharge rollers 133, 135 are provided instead of the scrapers 23. In the device 100, just like in the device 1, the force of gravity has a maximum effect on the transport through the container 105 on account of the vertical that extends both through the inlet 130 and through the outlet 131. In comparison with the scrapers 23 of the device 1, the discharge rollers 133, 135 provide the additional advantage that the gas present in the kneaded food products is distributed more uniformly. Moreover, the discharge rollers 133, 135 make it possible to obtain a layer of kneaded food products that has a uniform thickness. This is advantageous in connection with the further processing of the kneaded food products. Moreover, the thickness of the kneaded layer of food products can be adjusted by means of the discharge rollers 133, 135. In order to vary the amount to be discharged per unit time, it is possible to vary the rotational speed of the discharge rollers 133, 135, but it is also possible to vary the width of the discharge gap 137 for the purpose of adjusting the amounts to be discharged per unit time. In this way the residence time, and thus the quality of the food products, can be controlled in a simple manner.

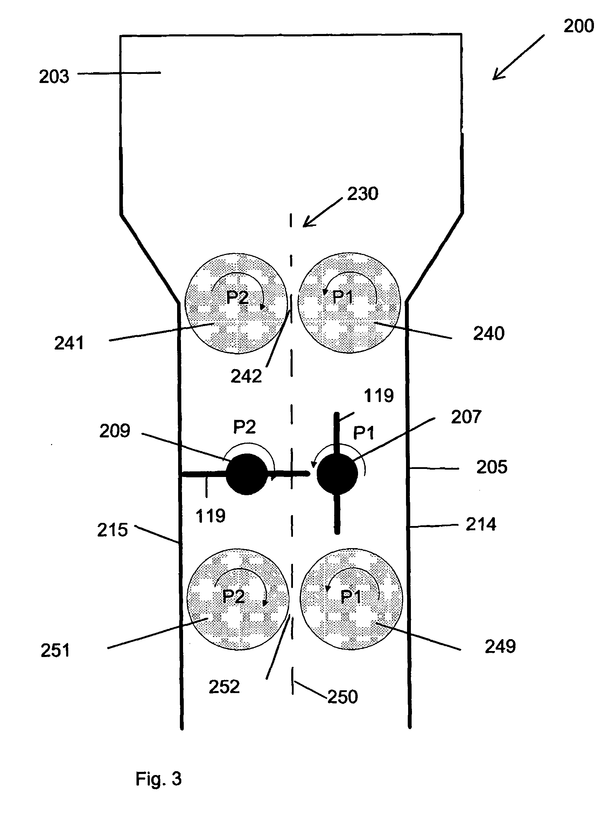

Figure 3 is a schematic view of another embodiment of the device 200 used in the method according to the present invention.

The device 200 comprises a pre-mixer 203 and a container 205. The inlet 230 of the container 205 is provided with two counter-rotatable supply rollers 240, 241 extending parallel to the shafts 207, 209, between which supply rollers a supply gap 242 is present. The supply gap 242 between the supply rollers 240, 241 and also the speed of rotation of the supply rollers is variably adjustable in a similar manner as with the discharge rollers 133, 135.

Preferably, the supply roller 240 located to the right of the supply gap 242 rotates in anti-clockwise direction (P1), whilst the supply roller 241 located to the left of the supply gap 242 rotates in clockwise direction (P2). Upon rotation of the supply rollers 240, 241 in this direction, the supply rollers comprise a transport function. As shown in figure 3, the discharge rollers 249, 251 rotate in the same way as the supply rollers 240, 241.

As illustrated by means of a dotted line in figure 3, the vertical 250 extends both through the supply gap 242 that forms at the inlet of the container 205 and through the discharge 252 that forms the outlet of the container 205.

The supply gap 242 and the discharge gap 252 are variably adjustable as regards their width dimension by moving the respective supply rollers 240, 241 and discharge rollers 249, 251 relative to each other. Furthermore, the speed of rotation of the supply rollers 240, 241 and the discharge rollers 249, 251 is variably adjustable.

In spite of the fact that the shafts 207, 209 as shown rotate in an identical manner as the rollers 240, 241, 249, 251, said shafts do not need to comprise a transport function, and they may also rotate in the reverse manner of the illustrated manner of rotation between the walls 214, 215 of the container 205.

The additional advantage of the supply gap 242 is that the food products from the pre-mixer 203 are evenly distributed over the longitudinally extending tool. In addition, a first mixing/kneading treatment takes place as a result of the compression between the supply rollers 240, 241.

The container 5 may additionally be provided with an air supply means (not shown) for supplying conditioned air in, for example, a controlled amount and having a controlled moisture content, composition and temperature.

The device used in the method according to the present invention can be furthermore provided with detection means which are known per se, by means of which the quality of the food products can be directly or indirectly determined, which detection means is connected, via a closed loop, to a control unit by means of which the speed of rotation of the shaft(s) 7, 9, 107, 109, 207, 209 and/or the supply rollers 240, 241 and/or the discharge rollers 133, 135, 249 and 251 can be adjusted, or by means of which the dimension of the supply gap 242 and/or the discharge gap 252 or the space between the scraper 23 can be adjusted or by means of which the temperature of the supply rollers and/or the discharge rollers and/or the container walls can be adjusted.

The supply rollers and the discharge rollers may be profiled and be heatable or coolable. In addition, a liquid can be forcibly introduced into the food products by means of said rollers, if desired. According to another possibility, two rollers defining a gap may have mutually different diameters.

It is also possible to use a metering unit instead of a pre-mixer.

## Claims

1. Method of continuously mixing and/or kneading food products, using a device (1: 100; 200) which is provided with at least one container (5; 105; 205) having an inlet (130; 230), an outlet (21; 131) as well as at least one rotary shaft (7, 9; 107, 109; 207, 209) extending substantially in the longitudinal direction of the container, which shaft is provided with at least one tool (17; 117), which tool comprises at least one bar which is connected to the shaft via spacers (19; 119; 219), said shaft comprising an operative area for continuous mixing and/or kneading food products, which extends in the longitudinal direction of said shaft, wherein the inlet and also the outlet extend in longitudinal direction substantially over the operative area of the shaft between the inlet and the outlet, **characterised in that** the transverse dimension of the inlet and the outlet can be variably adjusted, and **in that** the method comprises the step of temporarily varying the transverse dimension of the inlet and the outlet during mixing and/or kneading to control the amount per unit time that is supplied to the container and the amount per unit time that is discharged from the container, and thus the residence time and the volume of the food products in the container.

2. A method according to claim 1, **characterised in that** a virtual vertical extends both through the inlet and through the outlet.

3. A method according to any one of the preceding claims, **characterised in that** the maximum dimension of the outlet substantially corresponds to the maximum dimension of the inlet.

4. A method according to one or more of the preceding claims, **characterised in that** the outlet comprises at least two counter-rotatable discharge rollers (133, 135; 249, 251) extending parallel to the shafts, between which a discharge gap (137; 252) is present, wherein the discharge gap is variably adjustable by moving the discharge rollers with respect to each other.

5. A method according to claim 1, **characterised in that** the outlet comprises at least one counter-rotatable discharge roller extending parallel to the shaft, wherein between the roller and a wall of the container a discharge gap is present, wherein the the discharge gap is variably adjustable by moving the discharge roller with respect to the wall.

6. A method according to one or more of the preceding claims, **characterised in that** the inlet comprises at least two counter-rotatable supply rollers (240, 251) extending parallel to the shafts, between which a supply gap (242) is present.

7. A method according to claim 6, **characterised in that** the supply gap is variably adjustable by moving the supply rollers with respect to each other.

8. A method according to one or more of the preceding claims, **characterised in that** the device further comprises scrapers (23) for scraping the food products from the tool.

9. A method according to claim 4 and/or 5, **characterised in that** the device further comprises scrapers for scraping the food products from at least one discharge roller.

10. A method according claim 6 and/or 7, **characterised in that** the device further comprises scrapers for scraping the food products from at least one supply roller.

11. A method according to one or more of the preceding claims, **characterised in that** the outlet of the container extends between two scrapers (23), wherein the transverse dimension of the outlet can be varied by means of the scrapers.

12. A method according to one or more of the preceding claims, **characterised in that** the tool extends substantially parallel to the shaft.

13. A method according to one or more of the preceding claims, **characterised in that** the device is provided with at least two tools disposed opposite each other, which tools and which shaft extending therebetween lie in a virtual plane.

14. A method according to one or more of the preceding claims, **characterised in that** the device comprises a pre-mixer (3; 103) for providing a viscous mixture, which pre-mixer is disposed upstream of the container, whilst energy can be added to the viscous mixture in the container by means of the tool.

15. A method according to one or more of the preceding claims, **characterised in that** the shaft or the shafts disposed side by side in the container form a first layer, above which and/or below which there is provided at least one further layer of at least two counter-rotatable shafts extending side by side substantially in the longitudinal direction of the container.

## Patentansprüche

1. Verfahren zum kontinuierlichen Mischen und/oder Kneten von Lebensmittelerzeugnissen unter Verwendung einer Vorrichtung (1; 100; 200), die mit wenigstens einem Behälter (5; 105; 205) versehen ist, der einen Einlass (130; 230), einen Auslass (21; 131) sowie wenigstens eine Drehwelle (7, 9; 107, 109; 207, 209) aufweist, die sich im Wesentlichen in Längsrichtung des Behälters erstreckt, wobei die Welle mit wenigstens einem Werkzeug (17; 117) versehen ist, das wenigstens eine Stange umfasst, die über Abstandshalter (19; 119; 219) mit der Welle verbunden ist, wobei die Welle einen Wirkbereich zum kontinuierlichen Mischen und/oder Kneten von Lebensmittelerzeugnissen umfasst, der sich in Längsrichtung der Welle erstreckt, wobei sich der Einlass und auch der Auslass in Längsrichtung im Wesentlichen über den Wirkbereich der Welle zwischen dem Einlass und dem Auslass erstrecken, **dadurch gekennzeichnet, dass** die Querabmessung des Einlasses und des Auslasses variabel einstellbar ist und dass das Verfahren den Schritt umfasst, bei dem die Querabmessung des Einlasses und des Auslasses während des Mischens und/oder Knetens zeitweilig verändert wird, um die dem Behälter zugeführte Menge pro Zeiteinheit und die aus dem Behälter abgeführte Menge pro Zeiteinheit und somit die Verweilzeit und das Volumen der Lebensmittelerzeugnisse in dem Behälter zu steuern.

2. Verfahren nach Anspruch 1, **dadurch gekennzeichnet, dass** sowohl durch den Einlass als auch durch den Auslass eine virtuelle Vertikale verläuft.

3. Verfahren nach einem der vorhergehenden Ansprüche, **dadurch gekennzeichnet, dass** die maximale Abmessung des Auslasses im Wesentlichen der maximalen Abmessung des Einlasses entspricht.

4. Verfahren nach einem oder mehreren der vorhergehenden Ansprüche, **dadurch gekennzeichnet, dass** der Auslass wenigstens zwei gegenläufig drehbare Abführwalzen (133, 135; 249, 251) umfasst, die sich parallel zu den Wellen erstrecken und zwischen denen ein Abführspalt (137; 252) vorhanden ist, wobei der Abführspalt variabel einstellbar ist, indem die Abführwalzen relativ zueinander bewegt werden.

5. Verfahren nach Anspruch 1, **dadurch gekennzeichnet, dass** der Auslass wenigstens eine gegenläufig drehbare Abführwalze umfasst, die sich parallel zur Welle erstreckt, wobei zwischen der Walze und einer Wand des Behälters ein Abführspalt vorhanden ist, wobei der Abführspalt variabel einstellbar ist, indem die Abführwalze relativ zur Wand bewegt wird.

6. Verfahren nach einem oder mehreren der vorhergehenden Ansprüche, **dadurch gekennzeichnet, dass** der Einlass wenigstens zwei gegenläufig drehbare Zuführwalzen (240, 251) umfasst, die sich parallel zu den Wellen erstrecken und zwischen denen ein Zuführspalt (242) vorhanden ist.

7. Verfahren nach Anspruch 6, **dadurch gekennzeichnet, dass** der Zuführspalt variabel einstellbar ist, indem die Zuführwalzen relativ zueinander bewegt werden.

8. Verfahren nach einem oder mehreren der vorhergehenden Ansprüche, **dadurch gekennzeichnet, dass** die Vorrichtung ferner Schaber (23) zum Abschaben der Lebensmittelerzeugnisse von dem Werkzeug umfasst.

9. Verfahren nach Anspruch 4 und/oder 5, **dadurch gekennzeichnet, dass** die Vorrichtung ferner Schaber zum Abschaben der Lebensmittelerzeugnisse von wenigstens einer Abführwalze umfasst.

10. Verfahren nach Anspruch 6 und/oder 7, **dadurch gekennzeichnet, dass** die Vorrichtung ferner Schaber zum Abschaben der Lebensmittelerzeugnisse von wenigstens einer Zuführwalze umfasst.

11. Verfahren nach einem oder mehreren der vorhergehenden Ansprüche, **dadurch gekennzeichnet, dass** sich der Auslass des Behälters zwischen zwei Schabern (23) erstreckt, wobei die Querabmessung des Auslasses mittels der Schaber verändert werden kann.

12. Verfahren nach einem oder mehreren der vorhergehenden Ansprüche, **dadurch gekennzeichnet, dass** sich das Werkzeug im Wesentlichen parallel zur Welle erstreckt.

13. Verfahren nach einem oder mehreren der vorhergehenden Ansprüche, **dadurch gekennzeichnet, dass** die Vorrichtung mit wenigstens zwei Werkzeugen versehen ist, die einander gegenüberliegend angeordnet sind, wobei die Werkzeuge und die sich dazwischen erstreckende Welle in einer virtuellen Ebene liegen.

14. Verfahren nach einem oder mehreren der vorhergehenden Ansprüche, **dadurch gekennzeichnet, dass** die Vorrichtung einen Vormischer (3; 103) zur Bereitstellung einer viskosen Mischung umfasst, wobei der Vormischer stromaufwärts des Behälters angeordnet ist, während der viskosen Mischung im Behälter mittels des Werkzeugs Energie zugeführt werden kann.

15. Verfahren nach einem oder mehreren der vorhergehenden Ansprüche, **dadurch gekennzeichnet, dass** die Welle oder die im Behälter nebeneinander angeordneten Wellen eine erste Schicht bilden, oberhalb derer und/oder unterhalb derer wenigstens eine weitere Schicht aus wenigstens zwei gegenläufig drehbaren Wellen vorgesehen ist, die sich nebeneinander im Wesentlichen in Längsrichtung des Behälters erstrecken.

## Revendications

1. Procédé pour mélanger et/ou pétrir continuellement des produits alimentaires en utilisant un dispositif (1 ; 100 ; 200) qui est pourvu d'au moins un récipient (5 ; 105 ; 205) comportant une entrée (130 ; 230), une sortie (21 ; 131) ainsi qu'au moins un arbre rotatif (7, 9 ; 107, 109 ; 207, 209) s'étendant sensiblement dans le sens longitudinal du récipient, lequel arbre est pourvu d'au moins un outil (17 ; 117), lequel outil comprend au moins une barre qui est reliée à l'arbre par l'intermédiaire d'entretoises (19 ; 119 ; 219), ledit arbre comprenant une zone opérationnelle pour mélanger et/ou pétrir continuellement des produits alimentaires, qui s'étend dans le sens longitudinal dudit arbre, dans lequel l'entrée et, également, la sortie s'étendent dans un sens longitudinal sensiblement sur la zone opérationnelle de l'arbre entre l'entrée et la sortie, **caractérisé en ce que** la dimension transversale de l'entrée et la sortie peut être ajustée variablement et **en ce que** le procédé comprend l'étape de la variation provisoire de la dimension transversale de l'entrée et la sortie au cours du mélange et/ou du pétrissage pour réguler la quantité par unité de temps qui est fournie au récipient et la quantité par unité de temps qui est déchargée du récipient, et ainsi le temps de séjour et le volume des produits alimentaires dans le récipient.

2. Procédé selon la revendication 1, **caractérisé en ce qu'**une verticale virtuelle s'étend à travers l'entrée et à travers la sortie.

3. Procédé selon l'une quelconque des revendications précédentes, **caractérisé en ce que** la dimension maximale de la sortie correspond sensiblement à la dimension maximale de l'entrée.

4. Procédé selon une ou plusieurs des revendications précédentes, **caractérisé en ce que** la sortie comprend au moins deux rouleaux de déchargement pouvant tourner dans des sens inverses (133, 135 ; 249, 251) s'étendant parallèlement aux arbres, entre lesquels un espacement de déchargement (137 ; 252) est présent, dans lequel l'espacement de déchargement est ajustable variablement en déplaçant les rouleaux de déchargement l'un par rapport à l'autre.

5. Procédé selon la revendication 1, **caractérisé en ce que** la sortie comprend au moins un rouleau de déchargement pouvant tourner dans un sens inverse, s'étendant parallèlement à l'arbre, dans lequel, entre le rouleau et une paroi du récipient, un espacement de déchargement est présent, dans lequel l'espacement de déchargement est ajustable variablement en déplaçant le rouleau de déchargement par rapport à la paroi.

6. Procédé selon une ou plusieurs des revendications précédentes, **caractérisé en ce que** l'entrée comprend au moins deux rouleaux d'alimentation pouvant tourner dans des sens inverses (240, 251), s'étendant parallèlement aux arbres, entre lesquels un espacement d'alimentation (242) est présent.

7. Procédé selon la revendication 6, **caractérisé en ce que** l'espacement d'alimentation est ajustable variablement en déplaçant les rouleaux d'alimentation l'un par rapport à l'autre.

8. Procédé selon une ou plusieurs des revendications précédentes, **caractérisé en ce que** le dispositif comprend en outre des racloirs (23) pour racler les produits alimentaires de l'outil.

9. Procédé selon les revendications 4 et/ou 5, **caractérisé en ce que** le dispositif comprend en outre des racloirs pour racler les produits alimentaires de l'au moins un rouleau de déchargement.

10. Procédé selon les revendications 6 et/ou 7, **caractérisé en ce que** le dispositif comprend en outre des racloirs pour racler les produits alimentaires de l'au moins un rouleau d'alimentation.

11. Procédé selon une ou plusieurs des revendications précédentes, **caractérisé en ce que** la sortie du récipient s'étend entre deux racloirs (23), dans lequel la dimension transversale de la sortie peut être variée au moyen des racloirs.

12. Procédé selon une ou plusieurs des revendications précédentes, **caractérisé en ce que** l'outil s'étend sensiblement parallèlement à l'arbre.

13. Procédé selon une ou plusieurs des revendications précédentes, **caractérisé en ce que** le dispositif est pourvu d'au moins deux outils disposés à l'opposé l'un de l'autre, lesquels outils et lequel arbre s'étendant entre eux se trouvent dans un plan virtuel.

14. Procédé selon une ou plusieurs des revendications précédentes, **caractérisé en ce que** le dispositif comprend un pré-mélangeur (3 ; 103) pour fournir un mélange visqueux, lequel pré-mélangeur est disposé en amont du récipient, pendant que de l'énergie peut être ajoutée au mélange visqueux dans le récipient au moyen de l'outil.

15. Procédé selon une ou plusieurs des revendications précédentes, **caractérisé en ce que** l'arbre ou les arbres disposés côte à côte dans le récipient constituent une première couche au-dessus de laquelle et/ou au-dessous de laquelle il est fourni au moins une autre couche d'au moins deux arbres pouvant tourner dans des sens inverses, s'étendant côte à côte sensiblement dans le sens longitudinal du récipient.
